# EUROPÄISCHE PATENTSCHRIFT

(11) **EP 3 699 599 B1**
(45) Veröffentlichungstag und Bekanntmachung des Hinweises auf die Patenterteilung: **29.11.2023**
(21) Anmeldenummer: 19205784.2
(22) Anmeldetag: 29.10.2019
(51) Int. Cl.: B65G 11/20, G01N 35/04, B01L 1/00, G01N 35/00

(54) **ABFALLVERBRINGUNGSSYSTEM**
WASTE TRANSPORT SYSTEM
SYSTÈME DE TRANSFERT DE DÉCHETS

(30) Priorität: 25.02.2019 EP 19159163
(43) Veröffentlichungstag der Anmeldung: 26.08.2020
(73) Patentinhaber: Siemens Healthcare Diagnostics Products GmbH, 35041 Marburg (DE)
(72) Erfinder: Bernhard, Joachim, 61184 Karben (DE); Kalbfell, Heiko, 65232 Taunusstein (DE)

(56) Entgegenhaltungen:
- EP-A1- 3 100 698
- US-A- 4 893 722
- US-A1- 2007 068 832

## Beschreibung

Gegenstand der Erfindung ist ein Abfallverbringungssystem für einen automatisch arbeitenden Analysator und liegt auf dem technischen Gebiet der automatischen Analysegeräte.

Zahlreiche Nachweis- und Analyseverfahren zur Bestimmung physiologischer Parameter in Körperflüssigkeitsproben oder anderen biologischen Proben werden heute automatisiert in großer Anzahl in automatischen Analysegeräten, auch so genannten in vitro-Diagnostiksystemen, durchgeführt.

Heutige Analysegeräte sind in der Lage, eine Vielzahl von Nachweisreaktionen und Analysen mit einer Probe durchzuführen. Um eine Vielzahl von Untersuchungen automatisiert durchführen zu können, sind diverse Vorrichtungen zum räumlichen Transfer von Messzellen, Reaktionsbehältern und Reagenzbehältern erforderlich, wie z.B. Transferarme mit Greiffunktion, Transportbänder oder drehbare Transporträder, sowie Vorrichtungen zum Transfer von Flüssigkeiten, wie z.B. Pipettiervorrichtungen. Die Geräte umfassen eine Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Diese Verfahren ermöglichen den qualitativen und quantitativen Nachweis von Analyten, d.h. der nachzuweisenden oder zu bestimmenden Substanzen in Proben. Die Bestimmung klinisch relevanter Parameter, wie zum Beispiel der Konzentration oder Aktivität eines Analyten, erfolgt vielfach, indem ein Teil einer Probe mit einem oder mehreren Testreagenzien in einem Reaktionsgefäß, welches auch die Messzelle sein kann, vermischt wird, wodurch z.B. eine biochemische Reaktion oder eine spezifische Bindungsreaktion in Gang gesetzt wird, die eine messbare Veränderung einer optischen oder anderen physikalischen Eigenschaft des Testansatzes bewirkt.

Es ist bekannt, dass in automatisch arbeitenden Analysatoren, die zur Untersuchung von biologischen Körperflüssigkeiten eingesetzt werden, die benötigten Reagenzien mittels einer Pipettiervorrichtung mit einer Pipettiernadel in eine Messküvette eingefüllt werden. Die Messküvette wird dabei mit einem Küvettengreifer innerhalb des automatischen Analysegerätes zu verschiedenen Positionen mittels eines Robotorarms automatisch verfahren, der Teil einer Robotorstation ist. Nach der Messung wird die benutzte Messküvette zur Entsorgung durch einen Abfallschacht in einen Abfallbehälter verbracht. Die benutzte Küvette enthält häufig noch Flüssigkeit. Die in der Küvette sich befindende Flüssigkeit soll nicht aus der Küvette herausspritzen und den Analysator kontaminieren.

Die Messküvette wird zur Entsorgung durch den Abfallschacht in den Abfallbehälter mit dem Küvettengreifer zum Abfallschacht verfahren und in diesen verbracht. Dabei besteht die Gefahr, dass Flüssigkeit, die sich in den benutzten Küvetten befindet, aus den Küvetten herausspritzt und den Analysator kontaminiert. Weiter ist die Kontaminationsgefahr für Personal, das das Analysegerät bedient, erheblich.

Aus der EP 2308588 A2 sind verschiedene Greifsysteme und Greifer für Küvetten bekannt, die z.B. einteilig und elastisch verformbar ausgestaltet sind und passiv funktionieren. Andere Greifer sind mehrteilig ausgestaltet und können aktiv Greifbewegungen ausführen.

Beispielsweise wird die Messküvette am Abfallschacht vom Küvettengreifer an einen weiteren Greifer übergeben, der als mehrteiliger elektrischer Greifer ausgestaltet ist und aktiv Greifbewegungen ausführen kann. Der leere Küvettengreifer kann weiter verfahren werden, um die nächste Messküvette zu prozessieren. Der elektrische Greifer wird mittels einer Steuerungssoftware über dem Abfallrohr geöffnet, und die benutzte Küvette fällt durch den Abfallschacht in den Abfallbehälter. Dies führt dazu, dass das Verbringen von benutzten Messküvetten vergleichsweise aufwändig, zeitintensiv und fehleranfällig ist. Besonders betrifft dies die Übergabe der Messküvette an den elektrischen Greifer und den elektrischen Greifer selbst. Dies führt zu einem höheren Kosten- und Zeitaufwand und erhöht die Fehleranfälligkeit in der Abarbeitung eine Analyse in einem automatischen Analysegerät erheblich.

Aus der EP 3100698 A1 ist ein Abfallverbringungssystem bekannt zum Verbringen von Verbrauchsartikeln durch einen Abfallschacht in einen Abfallbehälter, das Abfallverbringungssystem umfassend einen Abfallschacht mit einer Öffnung, wobei der Abfallschacht eine Mehrzahl von Lamellen zum teilweise oder vollständigen Verschließen der Öffnung umfasst. Das Abfallverbringungssystem weist zahlreiche technische Vorteile auf, jedoch kann es insbesondere im Innern des Abfallschachts zu Verunreinigungen durch z.B. Flüssigkeiten kommen, die sich noch in den Verbrauchsartikeln befinden. Dies kann die Kontaminationsgefahr für Personal im Labor erheblich erhöhen. Weiter kann dies die Lebensdauer der Komponenten des Abfallverbringungssystems und insbesondre des Abfallschachts und auch des Abfallbehälters verringern und einen vorzeitigen Austausch nötig machen. Neben hohen Kosten für Servicepersonal und Ersatzteile bewirkt dies auch, dass die Verfügbarkeit der Analysesysteme verringert und die Fehleranfälligkeit erhöht ist.

Weiter ist aus der EP 3100698 A1 ein Abfallverbringungssystem bekannt, bei dem die Lamellen eine Vielzahl übereinander angeordnete Lamellenkränze bilden, die sich über die gesamte Länge des Abfallschachts bis zum Abfallbehälter erstrecken. Dies kann zwar teilweise die Verunreinigungen des Abfallschachts reduzieren, jedoch ist die Kraft, die benötigt wird, um Verbrauchsartikel durch die zahlreichen Lamellenkränze von oben nach unten durch den Abfallschacht zu drücken sehr hoch, so dass die benötigte Kraft von herkömmlichen Küvettengreifern nicht ausgeübt werden kann. Ähnliche Probleme wie bei den Küvetten ergeben sich auch bei anderen Verbrauchsartikeln wie z.B. austauschbaren Pipettenspitzen.

US 4 893 722 A liegt auf dem technischen Gebiet der manuell bedienten Sammelbehälter für Flaschen und Dosen, um diese dem Recycling zuzuführen.

Es ist daher Aufgabe der Erfindung, ein verbessertes Abfallverbringungssystem zur Verfügung zu stellen, welches die Kontaminationsgefahr für Personal, das das Analysegerät bedient oder wartet, verringert. Weiter soll eine Reduktion des Kosten- und Zeitaufwands und eine niedrigere Fehleranfälligkeit in einem automatischen Analysegerät erreicht werden. Gleichzeitig soll die Lebensdauer der Komponenten des Abfallverbringungssystems und insbesondre des Abfallschachts und auch des Abfallbehälters erhöht werden und ein vorzeitiger Austausch der Komponenten vermieden werden. Weiter soll das Abfallverbringungssystem mittels eines herkömmlichen Küvettengreifers und ohne übermäßigen Kraftaufwand es ermöglichen, dass Verbrauchsartikel durch den Abfallschacht in den Abfallbehälter verbracht werden können.

**Diese Aufgabe wird erfindungsgemäß durch die im Folgenden beschriebenen Gegenstände und Verfahren gelöst.**

Es wurde gefunden, dass ein verbessertes Abfallverbringungssystem erreicht werden kann, wenn eine Mehrzahl von Lamellen zum teilweisen oder vollständigen Verschließen von Öffnungen des Abfallschachts vorgesehen sind, wobei Lamellen jeweils im Bereich einer ersten und einer zweiten Öffnung des Abfallschachts Lamellenkränze bilden und wobei die Lamellenkränze einen Abstand aufweisen, der mindestens ein Drittel des Abstandes beträgt, der der Länge des Abfallschachts zwischen dessen erster und zweiter Öffnung entspricht.

Dies hat den Vorteil, dass die Kraft, die benötigt wird, um Verbrauchsartikel durch die Lamellenkränze von oben nach unten durch den Abfallschacht zu drücken vergleichsweise gering ist und gleichzeitig verhindert wird, dass die Verbrauchsartikel unkontrolliert durch den Abfallschacht in den Abfallbehälter fallen und dabei insbesondere den Abfallschacht stark kontaminieren durch aus den Verbrauchsartikeln austretende Flüssigkeiten. Die erfindungsgemäße Anordnung der Lamellenkränze bewirkt, dass die Verbrauchsartikel im Innern des Abfallschachts gestapelt werden und wenn der Abfallschacht voll ist, einzeln nach unten in den Abfallbehälter durch den Lamellenkranz im Bereich der zweiten Öffnung des Abfallschachts hindurchgedrückt werden. Die hierzu benötigte Kraft ist so gering, dass sie mittels herkömmlicher Küvettengreifer in automatischen Analysegeräten ausgeübt werden kann. Weiter wird die Kontaminationsgefahr für Personal, das das Analysegerät bedient oder wartet, verringert. Weiter wird eine Reduktion des Kosten- und Zeitaufwands und eine niedrigere Fehleranfälligkeit in einem automatischen Analysegerät erreicht. Gleichzeitig wird die Lebensdauer der Komponenten des Abfallverbringungssystems und insbesondre des Abfallschachts und auch des Abfallbehälters erhöht und ein vorzeitiger Austausch der Komponenten vermieden.

Weiter hat dies den Vorteil, dass die Lamellen zusätzliche mechanische und elektrische Komponenten, wie z.B. einen elektrischen Greifer ersetzen können und so elektrisch bewegte Teile eingespart werden können. Dies ermöglicht eine Reduktion des Kosten- und Zeitaufwands und eine niedrigere Fehleranfälligkeit in der Abarbeitung einer Analyse in einem automatischen Analysegerät.

Gegenstand der vorliegenden Erfindung ist insbesondere ein Abfallverbringungssystem zum Verbringen von Verbrauchsartikeln durch einen Abfallschacht in einen Abfallbehälter, das Abfallverbringungssystem umfassend einen Abfallschacht mit einer ersten Öffnung und einer zweiten Öffnung, wobei die erste Öffnung sich außerhalb des Abfallbehälters befindet und wobei die zweite Öffnung sich zum Abfallbehälter hin öffnet, wobei die erste Öffnung und die zweite Öffnung in einem ersten Abstand zueinander angeordnet sind, wobei der Abfallschacht eine Mehrzahl von selbstrückstellenden Lamellen zum teilweisen oder vollständigen Verschließen der Öffnungen umfasst, wobei die Lamellen mindestens zwei in einem zweiten Abstand übereinander angeordnete Lamellenkränze bilden, wobei mindestens ein erster Lamellenkranz die erste Öffnung verschließt und wobei mindestens ein zweiter Lamellenkranz die zweite Öffnung verschließt, wobei der zweite Abstand zwischen den Lamellenkränzen mindestens drei Viertel des ersten Abstands beträgt.

In einer weiteren vorteilhaften Ausführung ist der zweite Abstand gleich dem ersten Abstand, d.h. der Betrag des ersten Abstands ist gleich dem Betrag des zweiten Abstands.

Der zweite Lamellenkranz wirkt dabei als Bremse für Verbrauchsartikel, die das unkontrollierte Herausfallen von Verbrauchsartikeln, wie z.B. Küvetten, verhindert. Der erste oben durch die erste Öffnung in den Abfallschacht eingeführte Verbrauchsartikel bleibt zunächst im ersten Lamellenring stecken. Der nachfolgende Verbrauchsartikel schiebt den ersten Verbrauchsartikel durch den ersten Lamellenring und der erste Verbrauchsartikel fällt durch den Abfallschacht bis zum zweiten Lamellenring. Mit jedem weiteren von oben durch die erste Öffnung eingeführten Verbrauchsartikel stapeln sich die Verbrauchsartikel in dem Abfallschacht, bis dieser vollständig mit Verbrauchsartikeln gefüllt ist. Wird nun ein weiterer Verbrauchsartikel durch die erste Öffnung eingeführt, so wird der erste Verbrauchsartikel, der sich im Bereich des zweiten Lamellenrings am unteren Ende des Abfallschachts befindet, durch den zweiten Lamellenring durchgedrückt und fällt in den Abfallbehälter. Ohne den zweiten Lamellenring, der als Bremse wirkt, würde jeder Verbrauchsartikel durch den gesamten Abfallschacht unkontrolliert hindurch fallen. Bevorzugt ist der von dem zweiten Lamellenring auf die Verbrauchsartikel ausgeübte Widerstand so angepasst, dass die Verbrauchsartikel einerseits leicht aktiv durch die Bremse geschoben werden können und andererseits genug Widerstand bieten, dass Verbrauchsartikel nicht schon aufgrund ihres Eigengewichts im Schwerefeld der Erde ohne aktives Schieben von oben hindurchfallen. Im Gegensatz zu einem Abfallabwurfschacht mit Lamellen, einem Schlauch oder Ähnlichem über die gesamte Länge des Abfallschachts kann so aufgrund der örtlichen Begrenzung der Brems- und Haltewirkung des zweiten Lamellenrings am unteren Ende des Abfallschachts die insgesamt notwendige Kraft, um im Abfallschacht gestapelte Verbrauchsartikel durch den Abfallschacht in den Abfallbehälter zu drücken verringert werden. Dies führt dazu, dass die Länge des Abfallschachts verlängert werden kann und auch bei einem verlängerten Abfallschacht die Verbrauchsartikel mit vergleichsweise geringem Kraftaufwand durch z.B. einen herkömmlichen Küvettengreifer in einem automatischen Analysegerät in den Abfallbehälter durch den Abfallschacht hindurchgedrückt werden können. Gleichzeitig fallen die Verbrauchsartikel nicht unkontrolliert durch den Abfallschacht was bewirkt, dass die Kontamination des Abfallschachts sowie des Abfallbehälters durch z.B. aus den Verbrauchsartikeln austretende Restflüssigkeit entsprechend verringert wird. Dies wiederum kann zu verlängerten Lebensdauerzyklen des Abfallschachts und/oder des Abfallbehälters führen. Die Verfügbarkeit der Analysesysteme wird erhöht und die Fehleranfälligkeit verringert.

In einer bevorzugten Ausführung sind zwischen dem ersten Lamellenkranz und dem zweiten Lamellenkranz keine Lamellen und/oder Lamellenkränze angeordnet. Dies bewirkt, dass die insgesamt notwendige Kraft, um im Abfallschacht gestapelte Verbrauchsartikel durch den Abfallschacht in den Abfallbehälter zu drücken weiter minimiert werden kann.

In einer weiteren bevorzugten Ausführung ist die Mehrzahl von Lamellen zum teilweisen oder vollständigen Verschließen der Öffnung mit dem Abfallschacht verbunden.

In einer bevorzugten Ausführung ist der erste Lamellenkranz, der die erste Öffnung verschließt, unmittelbar im Bereich der ersten Öffnung und/oder an der ersten Öffnung angeordnet. Bevorzugt sind keine weiteren Lamellen und/oder Lamellenkränze zwischen dem ersten Lamellenkranz und der ersten Öffnung angeordnet.

In einer bevorzugten Ausführung ist der zweite Lamellenkranz, der die zweite Öffnung verschließt, unmittelbar im Bereich der zweiten Öffnung und/oder an der zweiten Öffnung angeordnet. Bevorzugt sind keine weiteren Lamellen und/oder Lamellenkränze zwischen dem zweiten Lamellenkranz und der zweiten Öffnung angeordnet.

In einer bevorzugten Ausführung umfasst der Abfallschacht außer den Lamellen des ersten und/oder zweiten Lamellenkranzes keine weiteren Lamellen und/oder Lamellenkränze.

Bevorzugt ist der Abfallschacht mindestens so lang wie die längste Ausdehnung der Verbrauchsartikel, besonders bevorzugt mindestens dreimal so lang wie die längste Ausdehnung der Verbrauchsartikel. Dies bewirkt, dass die Verbrauchsartikel nicht unmittelbar in den Abfallbehälter fallen, sondern zunächst sich vollständig im Abfallschacht befinden und vom Abfallschacht geleitet in den Abfallbehälter fallen. Weiter bewirkt dies, dass eine gewisse räumliche Trennung zwischen der Öffnung des Abfallschachts und dem Abfallbehälter erfolgt. Dies hat den Vorteil, dass ggf. noch in den Verbrauchsartikeln befindliche Flüssigkeit, die im Abfallbehälter aus den Verbrauchsartikeln austritt, nicht oder nur im verminderten Maß durch den Abfallaschacht hinaus gelangen kann durch z.B. Herausspritzen. Dies kann beispielsweise das Kontaminationsrisiko von Betriebs- und Servicepersonal reduzieren.

Bevorzugt ist der Querschnitt des Abfallschachts größer als die kleinste Ausdehnung, und kleiner als die größte Ausdehnung der Verbrauchsartikel. Somit ist beispielsweise bei Messküvetten, die eine zylindrische Form mit einer Höhe und einem Durchmesser aufweisen, wobei die Höhe größer ist als der Durchmesser, der Querschnitt des Abfallschachts bevorzugt größer als der Durchmesser und kleiner als die Höhe der Messküvetten. Dies hat den Vorteil, dass die Verbrauchsartikel den Abfallschacht nur in einer bestimmten Ausrichtung passieren können. Somit wird z.B. erreicht, dass ggf. noch in den Verbrauchsartikeln befindliche Flüssigkeit erst im Abfallbehälter aus den Verbrauchsartikeln austritt und nicht schon innerhalb des Abfallschachts. Dies kann beispielsweise das Kontaminationsrisiko von Betriebs- und Servicepersonal weiter reduzieren.

Der Abfallschacht weist einen ersten Innendurchmesser im Bereich der Lamellenkränze auf und wobei der Abfallschacht einen zweiten Innendurchmesser im Bereich zwischen dem ersten Lamellenkranz und dem zweiten Lamellenkranz aufweist, wobei der zweite Innendurchmesser kleiner ist als der erste Innendurchmesser. Dies bewirkt, dass Verbrauchsartikel, insbesondere Küvetten, nicht kippen und sich dadurch ineinander verkeilen und den Abfallschacht verstopfen oder verunreinigen, z.B. durch austretende Restflüssigkeiten. Durch den engen Querschnitt im Bereich zwischen den Lamellenringen werden die Verbrauchsartikel geometrisch durch den Abfallschacht geführt. Dies minimiert Taumelbewegungen der Verbrauchsartikel im Abfallschacht und vermeidet dadurch entstehende Spritzer von z.B. Restflüssigkeit in den Verbrauchsartikeln.

Bevorzugt umfasst das Abfallverbringungssystem weiter eine Rampe zum Umlenken von Verbrauchsartikeln, wobei die Rampe unterhalb der zweiten Öffnung angeordnet ist, so dass Verbrauchsartikel, die durch die zweite Öffnung in den Abfallbehälter fallen auf die Rampe fallen und von dieser umgelenkt werden.

Dies hat den Vorteil, dass wenn die Verbrauchsartikel nicht direkt in den Abfallbehälter fallen könne, von einer Rampe umgeleitet werden können. Der Weg von der zweiten Öffnung, die als Abwurföffnung des Abfallschachts dient, muss frei bleiben und darf nicht durch Verbrauchsartikel verstopft werden, da sonst z.B. das Analysegerät nicht weiter betrieben werden kann.

Bevorzugt ist die Rampe in ihrem Querschnitt rechteckig mit abgerundeten Ecken ausgestaltet. Bevorzugt umfasst die Rampe Seitenwände und wobei die Seitenwände im Querschnitt Rampe schräg ausgestaltet sind.

Dies hat den Vorteil, dass eine Blockierung der Rampe zuverlässig vermieden werden kann. Die sich in den Verbrauchsartikeln befindenden Flüssigkeiten sind häufig von klebriger Konsistenz, so dass Rückstände dieser Flüssigkeiten im Innern des Abfallschachts und/oder auf der Rampe zu einer Blockierung des Abfallschachts bzw. der Rampe führen können. Flüssigkeit kann beispielsweise aus den Verbrauchsartikeln ungewünschter Weise austreten, wenn diese einen Impuls erfahren wie etwa bei Auftreffen auf eine Umlenkrampe. Dabei hat die Ausformung der Rampe Einfluss auf das Auftreten von Spritzern. Wenn z.B. die Gesamtbreite des Querschnitts der Rampe größer ist als die längste Größenausdehnung der Verbrauchsartikel, im Fall von länglichen, zylinderförmigen Küvetten z.B. die Höhe der Küvetten, kann die Küvette sich im Bereich der Rampe querstellen oder drehen, was zum Austritt von Flüssigkeit führen kann. Vorteilhafterweise werden daher die Ecken mit einem größeren Radius abgerundet und die Breite der Rampe durch schräge Seitenwände verringert. Dies führt dazu, dass die Verbrauchsartikel, z.B. Küvetten, zwar Bewegungsspielraum haben, um nach dem Fallen vorhandene Bewegungsenergie durch Roll- und Taumelbewegungen zu reduzieren, der Bewegungsspielraum jedoch so weit eingeschränkt ist, dass Kipp- und Drehbewegungen der Küvette, welche zu Flüssigkeitsverlust führe können, minimiert werden. Auch werden gerade Flächen, bzw. Flächen, an die die Küvette anprallen kann, vermieden. Somit kann effektiv ein Blockieren der Rampe, insbesondere infolge von Austritt von klebriger Flüssigkeit aus den Verbrauchsartikeln, zuverlässiger vermieden werden.

Bevorzugt handelt es sich bei den Verbrauchsartikeln um Küvetten, insbesondere Messküvetten, oder um Pipettenspitzen.

Bevorzugt handelt es sich bei den Verbrauchsartikeln weiter um Produkte, die nur einmal verwendet und dann entsorgt bzw. ersetzt werden.

Beispielsweise wird die erste benutzte Messküvette zur ersten Öffnung des Abfallschachts verfahren und dort mit dem Küvettengreifer zwischen die Lamellen des ersten Lamellenrings gesteckt. Die Lamellen sind so ausgerichtet, dass sie eine Kraft auf die Messküvette ausüben und diese fest halten, so dass die benutzte Messküvette nicht in den Abfallschacht fällt. Der leere Küvettengreifer kann z.B. weiter verfahren werden, um die nächste Messküvette zu prozessieren.

Die Lamellen sind dabei vorteilhafterweise so ausgerichtet und ausgestaltet, dass sie die Bewegung der Messküvette so einschränken, dass ein Herausspritzen von Flüssigkeit aus der Küvette verhindert wird. Weiter sind die Lamellen vorteilhafterweise aus einem elastischen Material und/oder elastisch mit dem Abfallschacht verbunden, um eventuell beim Kontakt der Messküvette mit den Lamellen auftretende Beschleunigungen der Messküvette zu dämpfen und so Herausspritzen von Flüssigkeit aus der Küvette auch dann zu verhindern, wenn es zu Beschleunigungen der Messküvette kommt.

Eine zweite benutzte Messküvette wird dann entsprechend auf die erste benutzte Messküvette gesetzt. Der Küvettengreifer drückt die erste benutzte Messküvette dabei mit der zweiten benutzten Messküvette senkrecht nach unten weiter in die erste Öffnung des Abfallschachts hinein. Mit weiteren benutzten Messküvetten wird entsprechend verfahren. Wird eine der benutzen Messküvette dabei hinreichend tief in die Öffnung des Abfallschachts hineingedrückt, wird diese Messküvette von den Lamellen freigegeben und fällt bis zum zweiten Lamellenring im Bereich der zweiten Öffnung des Abfallschachts. Werden entsprechend weitere Messküvetten durch die erste Öffnung in Abfallschacht verbracht, so stapeln sich die Messküvetten im Innern des Abfallschachts übereinander, bis der Abfallschacht mit Messküvetten gefüllt ist. Werden dann weitere Messküvetten durch die erste Öffnung in Abfallschacht verbracht, so wird die unterste Messküvette, die zunächst von dem zweiten Lamellenring festgehalten wird, durch den zweiten Lamellenring hindurchgedrückt und die Messküvette fällt in den Abfallbehälter. Die anderen Messküvetten, die sich im Abfallschacht befinden, werden gleichzeitig entsprechend kontrolliert weiter nach unten gedrückt.

Vorzugsweise sind die Lamellen hinreichend elastisch, um zu verhindern, dass die zurückfedernden Lamellen, die die unterste Messküvette freigegeben haben, nicht gegen die sich darüber befindende Küvette schlagen, da dies sonst zu einem Herausspritzen von Flüssigkeit aus dieser Küvette führen könnte.

Mittels der Ausgestaltung der Lamellen des ersten Lamellenrings kann erreicht werden, dass die erste benutzte Messküvette bereits durch die zweite benutzte Messküvette hinreichend tief in die Öffnung des Abfallschachts hineingedrückt wird, um von den Lamellen freigegeben zu werden und bis zum zweiten Lamellenring zu fallen. Alternativ können die Lamellen so ausgestaltet sein, dass drei oder mehr benutzte Messküvetten auf die erste benutze Messküvette gesteckt werden müssen, bevor diese von den Lamellen freigegeben wird und bis zum zweiten Lamellenring fällt. Die entsprechende Ausgestaltung der Lamellen umfasst dabei beispielsweise deren Größe, Form und/oder Anordnung.

Vorteilhafterweise sind der erste und der zweite Lamellenkranz gleichartig ausgestaltet. Dies hat besonders z.B. auch dann Vorteile, wenn die Lamellenkränze als Lamelleneinsätze ausgestaltet sind und somit lediglich ein Typ von Lamellenkranz bzw. Lamelleneinsatz zu entwickeln und/oder zu fertigen ist.

Vorteilhafterweise umfasst ein erfindungsgemäßes Abfallverbringungssystem einen Abfallschacht, einen Abfallbehälter und eine Halterung für den Abfallschacht, wobei Küvetten durch den Abfallschacht in den Abfallbehälter verbracht werden können und der Abfallschacht mittels der Halterung am Abfallbehälter befestigt werden kann.

Weiter umfasst das Abfallverbringungssystem vorteilhafterweise eine Robotorstation mit einem automatisch verfahrbaren Transferarm mit einem Küvettengreifer zum Verfahren von Küvetten innerhalb des Aktionsbereichs des automatisch verfahrbaren Transferarms.

Vorteilhafterweise sind der Abfallschacht und der Abfallbehälter so im Schwerefeld der Erde angeordnet, dass eine Küvette durch die erste Öffnung des Abfallschachts in den Abfallschacht verbracht werden kann und dann durch die Schwerkraft nach unten durch den Abfallschacht bis zum zweiten Lamellenring fällt, bzw. nach hindurchdrücken durch den zweiten Lamellenring in den Abfallbehälter fällt.

Vorteilhafterweise umfasst das Abfallverbringungssystem mindestens ein Kunststoffspritzteil. Vorteilhafterweise sind der Abfallschacht, der Abfallbehälter, der Küvettengreifer und/oder der Lamelleneinsatz jeweils ein Kunststoffspritzteil. Alternativ können die Bauteile vorteilhafterweise mittels 3D-Druck hergestellt werden. Dies kann besonders auch für kleinere Ersatzteile, wie z.B. einen Lamellenring besonders vorteilhaft sein.

Vorteilhafterweise sind der Abfallschacht und die Lamellenringe mittels 3D-Druck hergestellt, bevorzugt in einem einzigen Druckvorgang oder verteilt auf mehrere Druckvorgänge.

Vorteilhafterweise wird der Abfallschacht besonders stabil ausgestaltet, und die Lamellen werden elastisch ausgestaltet. Dies hat den Vorteil, dass Beschleunigungskräfte auf die Messküvetten vermieden oder wenigstens minimiert werden.

In vorteilhafter Ausgestaltung bestehen die Lamellen aus Kunststoff und/oder Gummi. Dies ermöglicht eine besonders preiswerte Fertigung der Lamellen mit üblichen Herstellungsverfahren. In weiterer vorteilhafter Ausgestaltung sind die Lamellen aus Metall, z.B. Kupfer, Stahl, Aluminium.

Vorteilhafterweise umfassen die Lamellen Blattfedern oder die Lamellen sind als Blattfedern ausgestaltet. Die Blattfedern können dabei z.B. mit dem Abfallschacht verbunden sein oder unmittelbar Teil des Abfallschachts sein.

Vorteilhafterweise sind die Lamellen aus dem gleichen Werkstoff wie der Abfallschacht gefertigt. Dies ist besonders vorteilhaft bei der Herstellung von Abfallschächten als 3D Druckteile.

Vorteilhafterweise umfassen die Lamellen Spiralfedern oder die Lamellen sind als Spiralfedern ausgestaltet.

Vorteilhafterweise umfassen die Lamellen Schaumstoff oder die Lamellen bestehen aus Schaumstoff. Vorteilhafterweise ist der Schaumstoff offenporig oder geschlossenporig ausgestaltet. Die Verwendung von geschlossenporigem Schaumstoff ist auch aufgrund der rückstellenden Eigenschaften besonders vorteilhaft. Bevorzugt umfasst oder besteht der Schaumstoff aus expandiertes Polypropylen (EPP).

Vorteilhafterweise sind die Lamellenkränze als geschlossener Ring ausgestaltet, der die Verbrauchsartikel zunächst festhält und durch den die Verbrauchsartikel hindurch geschoben werden können. Dies ist insbesondere vorteilhaft, wenn die Lamellen aus Schaumstoff oder einem anderen nachgiebigen Material bestehen. Bevorzugt ist dabei der erste und/oder zweite Lamellenkranz als geschlossener Ring ausgestaltet.

In einer weiteren vorteilhaften Ausführungsform sind die Lamellenkränze als Ring oder Trichter mit einem Schlitz in Richtung der Verbringungsrichtung der Verbrauchsartikel ausgestaltet, so dass ein Verbrauchsartikel, z.B. eine Küvette, den Trichter oder Ring beim Hindurchdrücken des Verbrauchsartikels den Trichter oder Ring entsprechend aufweiten muss. Dies hat den Vorteil, dass ein solcher Trichter besonders gut in das Abfallschacht integrieren lässt.

Vorteilhafterweise umfassen oder bestehen die Lamellen aus Bürsten. Vorteilhafterweise umfassen oder bestehen die Lamellenkränze aus einem oder mehreren Bürstenringen.

Vorteilhafterweise ist der erste und/oder der zweite Lamellenkranz als elastische Verengung des Abfallschachts ausgestaltet. Die Verengung ist dabei so ausgestaltet, dass die Verbrauchsartikel entsprechend durch die Verengung hindurch gedrückt werden können. Bevorzugt umfasst die elastische Verengung Öffnungen in einer Wandung des Abfallschachts, wobei die Öffnungen bevorzugt als länglich Schlitze ausgestaltet sind. Bevorzugt sind die länglichen Schlitze dabei parallel zur Richtung der Verbringung der Verbrauchsartikel durch den Abfallschacht angeordnet.

Vorteilhafterweise umfassen oder bestehen die Lamellen aus Kugeln, die innerhalb einer Halterung in ihrer Ruheposition mittels einer oder mehrerer Federn in Richtung der Mittelachse des Abfallschacht gedrückt werden. Bevorzugt umfassen oder bestehen die Federn aus einer Spiralfeder.

In weiterer vorteilhafter Ausgestaltung sind die Lamellen, die die Lamellenringe bilden, mit dem Abfallschacht lösbar verbunden, z.B. durch Einklemmen der Lamellen in den Abfallschacht, mittels einer Klebeverbindung und/oder einer Schraubverbindung. Dies hat den Vorteil, dass die Lamellen, z.B. bei Verschleiß, einfach und kostengünstig ausgetauscht werden können, ohne dass der Abfallschacht oder weitere Teile des Abfallverbringungssystems mitausgetauscht werden müssen. Dies kann auch zu erheblichen Kostenersparnissen führen.

In bevorzugter Ausführungsform sind die Lamellen miteinander verbunden und bilden einen Lamelleneinsatz, der als ein Teil am Abfallschacht befestigt werden kann. Dies vereinfacht das Anbringen und Austauschen der Lamellen erheblich, da nur ein Lamelleneinsatz zu handhaben ist und nicht eine Vielzahl einzelner Lamellen.

In bevorzugter Ausführungsform sind die Lamellen im Querschnitt des Abfallschachts radial nach innen gerichtet. Dies hat den Vorteil, dass der Lamelleneinsatz besonders einfach und kostengünstig gefertigt werden kann. Weiter ist die Funktion des Lamelleneinsatzes unabhängig von der radialen Orientierung des Lamelleneinsatzes auf der Öffnung des Abfallschachts. Dies kann besonders bei Küvetten mit einem eckigen Querschnitt vorteilhaft sein, da solche Küvetten dann unabhängig von ihrer Orientierung relativ zum Abfallschacht bzw. des Lamelleneinsatzes in den Lamelleneinsatz gesteckt werden können und eine aufwändige Orientierung unterbleiben kann.

In weiterer bevorzugter Ausführungsform umfasst der Lamelleneinsatz mindestens einen Lamellenkranz. Dies hat den Vorteil, dass der Lamelleneinsatz einfach und kostengünstig hergestellt werden kann. Weiter kann der Lamelleneinsatz so besonders einfach einstückig gefertigt werden, was eine besonders einfache und kostengünstige Herstellung und Montage bzw. Demontage ermöglicht. Dies ist von besonderer Bedeutung, wenn der Lamelleneinsatz als Verschleißteil ausgebildet ist und regelmäßig ausgetauscht werden muss. Weiter werden Küvetten von einem Lamellenkranz besonders zuverlässig festgehalten, und es kann ein Kippen der Messküvette verhindert werden, was sonst zum Herauslaufen von Flüssigkeit aus der Messküvette führen könnte. Ein Lamellenkranz wird vorliegend auch als Lamellenring bezeichnet.

In besonders bevorzugter Ausführungsform umfasst der Lamelleneinsatz mindestens zwei übereinander angeordnete Lamellenkränze. Dies hat den Vorteil, dass Küvetten besonders zuverlässig festgehalten werden. Insbesondere werden die Küvetten von den Lamellenkränzen in einer senkrechten Position gehalten und stellen sich nicht schräg. Dies vermeidet besonders zuverlässig, dass Flüssigkeit aus einer benutzten Küvette unbeabsichtigt austreten kann.

In weiterer bevorzugter Ausführungsform sind die Lamellen einander benachbarter Lamellenkränze zueinander versetzt. Dies hat den Vorteil, dass Küvetten besonders leicht und wenig fehleranfällig in die Lamellenkränze gesteckt werden können. Weiter werden die Küvetten beim Einsetzen in die Lamellenkränze besonders akkurat bezüglich der Lamellenkränze ausgerichtet und zentriert. Dies ermöglicht ein besonders zuverlässiges Verbringen der Küvetten durch den Abfallschacht in den Abfallbehälter.

Bevorzugt ist der Abfallschacht als Rohr ausgestaltet. Bevorzugt ist das Rohr als gerades Rohr ausgestaltet. Bevorzugt ist das Rohr steif und/oder unbiegsam ausgestaltet. In einer weiteren bevorzugten Ausführungsform ist der Abfallschacht als gebogenes Rohr ausgestaltet. In einer weiteren bevorzugten Ausführungsform ist der Abfallschacht als Schlauch ausgestaltet, bevorzugt als biegsamer Schlauch.

In weiterer bevorzugter Ausführungsform weist die Öffnung des Abfallschachts einen runden, ovalen, quadratischen, rechteckigen oder polygonen Querschnitt auf. Dies hat den Vorteil, dass die Form des Querschnitts der Öffnung an den Querschnitt der Küvetten angepasst werden kann. Dies ermöglicht ein besonders einfaches und zuverlässiges Verbringen der Küvetten durch den Abfallschacht in den Abfallbehälter. Weiter kann der Abfallschacht so besonders raumsparend ausgestaltet werden, was in automatischen Analysegeräten von besonderem Vorteil sein kann.

In einer anderen bevorzugten Ausführungsform umfasst der Abfallschacht im Bereich der Öffnung einen Öffnungsmechanismus für einen Küvettengreifer. Wenn eine Messküvette mittels eines Küvettengreifers zur Öffnung des Abfallschachts verfahren und dort mit dem Küvettengreifer in die Lamellen gesteckt wird, öffnet der Öffnungsmechanismus den Küvettengreifer gleichzeitig, so dass der Küvettengreifer die Küvette loslässt und ohne Küvette weiter verfahren werden kann, um weitere Küvetten zu prozessieren. Dies hat den Vorteil, dass Küvetten einerseits fest mit dem Küvettengreifer verbunden sind bei der Verfahrung und andererseits ohne größeren zusätzlichen Aufwand in der Öffnung des Abfallschachts vom Küvettengreifer freigegeben werden.

In weiterer bevorzugter Ausführungsform umfasst der Öffnungsmechanismus eine Struktur zum Öffnen eines Küvettengreifers, die in der Form ähnlich einem Prisma mit einem Dreieck als Grund- und Deckfläche ist. Dies hat den Vorteil, dass der Öffnungsmechanismus besonders einfach und kostengünstig implementiert werden kann. Weiter ist diese Ausgestaltung besonders vorteilhaft in Kombination mit einem einstückig gefertigten Küvettengreifer, der durch die dreieckige Struktur besonders leicht und effizient auseinandergedrückt werden kann, um die Küvette freizugeben.

In einer Ausführungsform, die nicht Teil der Erfindung ist, umfasst das Abfallverbringungssystem anstelle des zweiten Lamellenkranzes einen Schlauch mit einem ersten und einem zweiten Ende und wobei der Schlauch mit dem ersten Ende am Abfallschacht im Bereich der zweiten Öffnung angebracht ist und wobei sich das zweite Ende innerhalb des Abfallbehälters befindet.

Bevorzugt handelt es sich bei dem Schlauch um einen Netzschlauch, eine elastische Tülle und/oder einen Sternschlauch.

Bevorzugt ist der Schlauch dehnbar genug, um einen Verbrauchsartikel einerseits sicher halten zu können und andererseits ein Weiterrutschen des Verbrauchsartikels innerhalb des Schlauchs zu ermöglichen, wenn weitere Verbrauchsartikel nachgedrückt werden. Beispielsweise handelt es sich bei dem Schlauch um einen Netzschlauch, Gewebeschlauch und/oder einen Schlauch mit einem sternförmigen Querschnitt. Dies hat den Vorteil, dass die Verbrauchsartikel vom Schlauch geführt werden und nicht unkontrolliert unter Einwirkung der Schwerkraft durch den Abfallschacht fallen. So kann eine Kontamination des Inneren des Abfallschachts z.B. durch Flüssigkeit, die sich in und/oder an Verbrauchsartikeln befindet, vermieden werden. Dies bewirkt, dass der Abfallschacht seltener oder überhaupt nicht gereinigt und/oder ausgetauscht werden muss. Ein weiterer Vorteil besteht darin, dass die Verbrauchsartikel sich nicht unkontrolliert im Abfallschacht verkeilen oder verkleben können und somit ein Blockieren des Abfallschachts durch Verbrauchsartikel sicher vermieden wird.

Bevorzugt reicht das zweite Ende des Schlauches in den Abfallbehälter hinein. Dies hat den Vorteil, dass die Verbrauchsartikel erst im Abfallbehälter unter Einwirkung der Schwerkraft herunterfallen und dadurch ein Verschmutzen des Abfallschachts auch im an den Abfallbehälter angrenzenden Teil vermieden wird.

In einer weiteren bevorzugten Ausführungsform der Erfindung umfasst das Abfallverbringungssystem anstelle des zweiten Lamellenkranzes eine selbstverschließende Klappe, wobei die Klappe bevorzugt ein Filmscharnier umfasst, und wobei die Klappe am Abfallschacht im Bereich der zweiten Öffnung angebracht ist und die zweite Öffnung verschließt. Dies hat den Vorteil, dass mit einer Klappe als Bremse für die Verbrauchsartikel die Fallrichtung der Verbrauchsartikel bei, und/oder nach Durchtritt durch die zweite Öffnung des Abfallschachts bei teilweise oder vollständig geöffneter Klappe beeinflusst werden kann, da die Verbrauchsartikel durch die geöffnete Klappe entsprechend abgelenkt werden.

Bevorzugt haben die Lamellen bzw. Lamellenringe unterschiedliche elastische Eigenschaften. Beispielsweise kann es vorteilhaft sein, dass die Lamellen bzw. Lamellenkränze im Bereich der ersten Öffnung des Abfallschachts fester und weniger elastisch ausgebildet sind als die Lamellen bzw. Lamellenkränze, die sich im Abfallschacht im Bereich der zweiten Öffnung näher Richtung des Abfallbehälters befinden und die weicher ausgebildet sind. Dies hat den Vorteil, dass die Verbrauchsartikel von den festeren Lamellen sicher gehalten werden und durch die weicheren Lamellen leichter weiter in Richtung des Abfallbehälters gedrückt werden können.

Bevorzugt ist ein erfindungsgemäßes Abfallverbringungssystem für ein automatisches Analysegerät geeignet.

Ein anderer Gegenstand der Erfindung ist ein Abfallbehälter mit einem vorgenannten erfindungsgemäßen Abfallverbringungssystem. Dies hat den Vorteil, dass die benutzten Küvetten in dem Abfallbehälter gesammelt werden können und der weiteren Entsorgung bzw. Wiederverwertung im Rohstoffkreislauf zugeführt werden können.

Ein anderer Gegenstand der Erfindung ist ein Halter für einen vorgenannten erfindungsgemäßen Abfallschacht. Der Halter ist mit einem Abfallbehälter verbunden und erlaubt die Herstellung einer lösbaren Verbindung zwischen dem Abfallschacht und dem Abfallbehälter. Bevorzugt handelt es sich bei der lösbaren Verbindung um eine Steckverbindung, die ohne Werkzeugeinsatz per Hand hergestellt und gelöst werden kann. Dies hat den Vorteil, dass der Abfallschacht besonders leicht und schnell montiert und demontiert werden kann. Dies führt auch zu erheblichen Kostenvorteilen.

In besonders vorteilhafter Ausgestaltung wird die Steckverbindung zwischen Halter und Abfallschacht durch eine Drehbewegung des Abfallschachts arretiert. Dies hat den Vorteil, dass die lösbare Verbindung zwischen Halter und Abfallschacht besonders einfach und wenig fehleranfällig hergestellt und gelöst werden kann.

Bevorzugt ist das erfindungsgemäße Abfallverbringungssystem zur Verwendung in einem automatischen Analysegerät geeignet.

Ein anderer Gegenstand der Erfindung ist ein Analysegerät, welches ein vorgenanntes erfindungsgemäßes Abfallverbringungssystem umfasst. Das Analysegerät umfasst weiter vorteilhafterweise mindestens eine Pipettiereinheit und mindestens eine Messeinrichtung zum optischen und/oder elektronischen quantitativen Nachweis von mindestens einem Analyten in einer Probe.

Ein weiterer Gegenstand der Erfindung ist die Verwendung eines erfindungsgemäßen Abfallverbringungssystems zum Verbringen von Küvetten durch einen Abfallschacht in einen Abfallbehälter für Küvetten.

Ein weiterer Gegenstand der Erfindung ist die Verwendung eines erfindungsgemäßen Abfallverbringungssystems in einem automatischen Analysegerät zum Verbringen von Küvetten durch einen Abfallschacht in einen Abfallbehälter für Küvetten.

Ein weiterer Gegenstand der Erfindung ist ein Verfahren zum Verbringen von Küvetten in einen Abfallbehälter in einem erfindungsgemäßen automatischen Analysegerät umfassend einen Küvettengreifer, wobei der Küvettengreifer die Küvette zur Öffnung des Abfallschachts verfährt.

Unter einer "Probe" ist im Sinne der Erfindung das Material zu verstehen, dass die nachzuweisende Substanz (den Analyten) vermutlich enthält. Der Begriff "Probe" umfasst insbesondere biologische Flüssigkeiten von Menschen oder Tieren, wie z.B. Blut, Plasma, Serum, Sputum, Exsudat, bronchoalveoläre Lavage, Lymphflüssigkeit, Synovialflüssigkeit, Samenflüssigkeit, Vaginalschleim, Feces, Urin, Liquor, aber auch z.B. durch Homogenisation oder Zelllyse für die photometrische, bevorzugt nephelometrische Bestimmung entsprechend aufgearbeitete Gewebe- oder Zellkulturproben. Ferner können auch z.B. pflanzliche Flüssigkeiten oder Gewebe, forensische Proben, Wasser- und Abwasserproben, Nahrungsmittel, Arzneimittel als Probe dienen, die ggf. vor der Bestimmung einer entsprechenden Probenvorbehandlung zu unterziehen sind.

Bei einem quantitativen Nachweis wird die Menge, die Konzentration oder die Aktivität des Analyten in der Probe gemessen. Von dem Begriff des "quantitativen Nachweises" sind auch semiquantitative Methoden umfasst, die nur die ungefähre Menge, Konzentration oder Aktivität des Analyten in der Probe erfassen oder nur zu einer relativen Mengen-, Konzentrations- oder Aktivitätsangabe dienen können. Unter einem qualitativen Nachweis ist der Nachweis des Vorhandenseins des Analyten in der Probe überhaupt oder das Anzeigen, dass die Menge, Konzentration oder Aktivität des Analyten in der Probe unterhalb oder oberhalb eines bestimmten oder mehrerer bestimmter Schwellenwerte liegt, zu verstehen.

Bei einer Messküvette handelt es sich beispielsweise um eine Küvette oder ein Reaktionsgefäß aus Glas, Kunststoff oder Metall. Vorteilhafterweise ist die Messküvette aus optisch transparenten Materialien gefertigt, was besonders beim Einsatz von optischen Analyseverfahren vorteilhaft sein kann.

Die Begriffe "Messküvette" und "Küvette" werden synonym verwendet.

**Die Erfindung wird anhand von Zeichnungen exemplarisch näher erläutert. Darin zeigen:**
FIG 1 schematisch den Aufbau eines Abfallverbringungssystems (1) umfassend einen Abfallschacht mit einem ersten und einem zweiten Lamellenkranz,
FIG 2 schematisch den Aufbau eines Abfallverbringungssystems (1) umfassend einen Abfallschacht mit einem ersten Lamellenkranz und einem Netzschlauch als Verbrauchsartikelbremse,
FIG 3 schematisch den Aufbau eines Abfallverbringungssystems (1) umfassend einen Abfallschacht mit einem ersten Lamellenkranz und einer elastischen Tülle als Verbrauchsartikelbremse,
FIG 4 schematisch den Aufbau eines Abfallverbringungssystems (1) umfassend einen Abfallschacht mit einem ersten Lamellenkranz und einem Sternschlauch als Verbrauchsartikelbremse,
FIG 5 und 6 schematisch den Aufbau eines Abfallverbringungssystems (1) umfassend einen Abfallschacht mit einem ersten Lamellenkranz und einer selbstverschließenden Klappe als Verbrauchsartikelbremse,
FIG 7 bis 9 schematisch die Ausgestaltung der Rampe zum Umlenken der Verbrauchsartikel in verschiedenen Ansichten.

**Gleiche Teile sind in allen Figuren mit denselben Bezugszeichen versehen.**

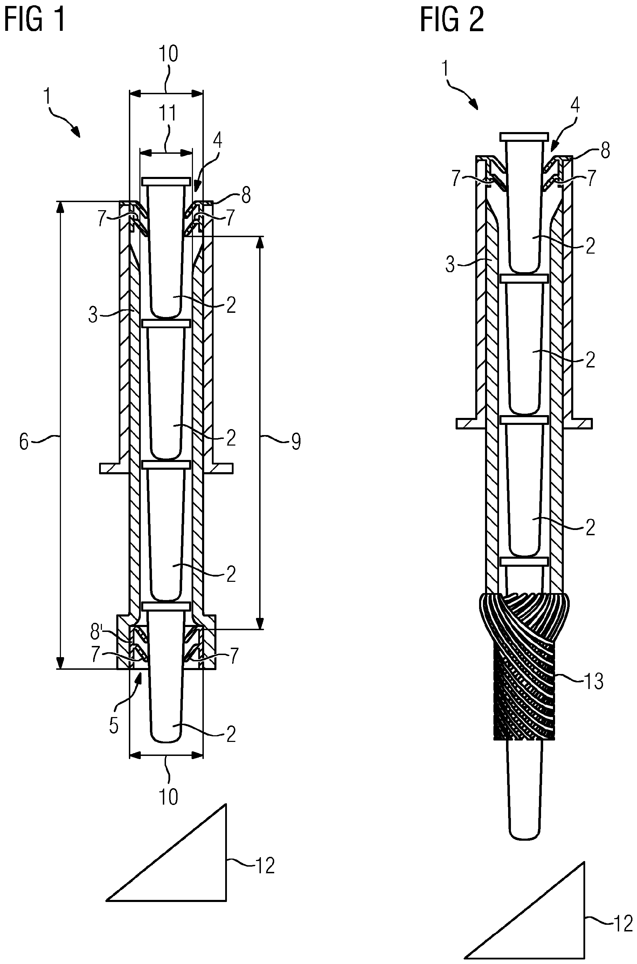

Das Abfallverbringungssystem (1) gemäß FIG 1 ist eingebettet in ein nicht näher dargestelltes Analysegerät, welches zur Ausführung einer Vielzahl von Analysen von Proben ausgestaltet ist. Dazu umfasst das automatische Analysegerät eine Vielzahl von nicht gezeigten Pipettiereinrichtungen und Transporteinrichtungen sowie weiterhin eine Steuereinheit zum automatisierten Auswerten der Analysen.

Das Abfallverbringungssystem (1) ist ausgestaltet zum Verbringen von Verbrauchsartikeln, wie z.B. Küvetten (2) durch einen Abfallschacht (3) in einen Abfallbehälter und umfasst einen Abfallschacht (3) mit einer ersten Öffnung (4) und einer zweiten Öffnung (5), wobei die erste Öffnung (4) sich außerhalb des Abfallbehälters befindet und wobei die zweite Öffnung (5) sich zum Abfallbehälter hin öffnet, wobei die erste Öffnung (4) und die zweite Öffnung (5) in einem ersten Abstand (6) zueinander angeordnet sind, wobei der Abfallschacht (3) eine Mehrzahl von selbstrückstellenden Lamellen (7) zum teilweisen oder vollständigen Verschließen der Öffnungen (4, 5) umfasst, wobei die Lamellen (7) mindestens zwei in einem zweiten Abstand (9) übereinander angeordnete Lamellenkränze (8, 8') bilden, wobei mindestens ein erster Lamellenkranz (8) die erste Öffnung (4) verschließt und wobei mindestens ein zweiter Lamellenkranz (8') die zweite Öffnung (5) verschließt, wobei der zweite Abstand (9) zwischen den Lamellenkränzen mindestens ein Drittel, bevorzugt mindestens die Hälfte, besonders bevorzugt mindestens drei Viertel des ersten Abstands (6) beträgt.

Vorteilhafterweise beträgt der erste Abstand (6) dabei mindestens 90 mm und der zweite Abstand (9) mindestens 60 mm. Eine Küvette hat vorteilhafterweise z.B. eine Abmessung von etwa 30 mm in der Höhe und 10 mm im Außendurchmesser.

Zwischen dem ersten Lamellenkranz (8) und dem zweiten Lamellenkranz (8') sind keine Lamellenkränze angeordnet.

Der Abfallschacht (3) weist einen ersten Innendurchmesser (10) im Bereich der Lamellenkränze (8, 8') auf und einen zweiten Innendurchmesser (11) im Bereich zwischen dem ersten Lamellenkranz (8) und dem zweiten Lamellenkranz (8`), wobei der zweite Innendurchmesser (11) kleiner ist als der erste Innendurchmesser (10).

Das Abfallverbringungssystem (1) umfasst weiter eine Rampe (12) zum Umlenken von Küvetten (2), wobei die Rampe (12) unterhalb der zweiten Öffnung (5) angeordnet ist, so dass Verbrauchsartikel (2), die durch die zweite Öffnung (5) in den Abfallbehälterfallen auf die Rampe (12) fallen und von dieser umgelenkt werden.

Die Rampe umfasst vorteilhafterweise Seitenwände und ist in ihrem Querschnitt rechteckig mit abgerundeten Ecken und schrägen Seitenwänden ausgestaltet (nicht dargestellt).

Im Innern des Abfallschachts (3) ist also dessen Querschnitt soweit reduziert, dass Küvetten (2) nicht kippen können und sich damit nicht im Abfallschacht (3) verkeilen können. Am unteren Ende des Abfallschachts (2) wirkt der zweite Lamellenkranz (8') als Küvettenbremse, die das Herausfallen von Küvetten aus dem Abfallschacht (2) verhindert. Die erste oben in den Abfallschacht (3) eingeführte Küvette (2) bleibt zunächst im ersten Lamellenkranz (8) stecken. Die nachfolgende Küvette (2) schiebt die erste Küvette (2) durch den ersten Lamellenkranz (8), so dass sie bis zum zweiten Lamellenkranz (8') fällt und dort gebremst wird. Durch den verengten Querschnitt wird die Küvette geometrisch geführt, so dass ein Taumeln und damit durch Taumeln entstehende Spritzer minimiert werden. Mit jeder weiteren oben eingeführten Küvette (2) stapeln sich die Küvetten (2) im Abfallschacht (3), bis er mit Küvetten (2) gefüllt ist. Wenn nun oben eine weitere Küvette (2) eingeführt wird, so wird dadurch die unterste Küvette (2) durch den zweiten Lamellenkranz (8') hindurchgedrückt und fällt nach unten in den Abfallbehälter, bzw. auf die Rampe im Abfallbehälter. Ohne den zweiten Lamellenkranz (8') würde jede Küvette (2) über die gesamte Länge des Abfallschachts (3) im Einfluss des Schwerefelds der Erde fallen. Der Reibwiderstand des zweiten Lamellenkranzes (8') ist also so angepasst, dass die Küvetten (2) aktiv durch den Lamellenkranz (8') hindurch geschoben werden können, jedoch genug Widerstand bietet, um ein selbständiges hindurchfallen der Küvetten zu verhindern. Im Gegensatz zu einem Abfallschacht (3) mit z.B. Lamellen, Lamellenringen oder einem Schlauch auf der gesamten Länge des Abfallschacht (3), erlaubt es die örtlich begrenzte Brems- und Haltewirkung am unteren Ende des Abfallschachts (3) die entstehende Reibung beim Einführen der Küvetten (2) am oberen Ende zu minimieren. Dies erlaubt es, die Gesamtlänge des Abfallschachts (3) zu maximieren, bei gleichzeitiger Minimierung der zum Einführen der Küvetten (2) nötigen Kraft.

Fig. 2 zeigt eine Abwandlung des in Fig. 1 dargestellten Abfallverbringungssystems (1). Anstelle des zweiten Lamellenkranzes (8') ist ein Netzschlauch (13) vorgesehen, der die zweite Öffnung (5) verschließt. Im Übrigen sind die Abfallverbringungssysteme (1) nach Fig. 1 und Fig. 2 gleichartig ausgestaltet.

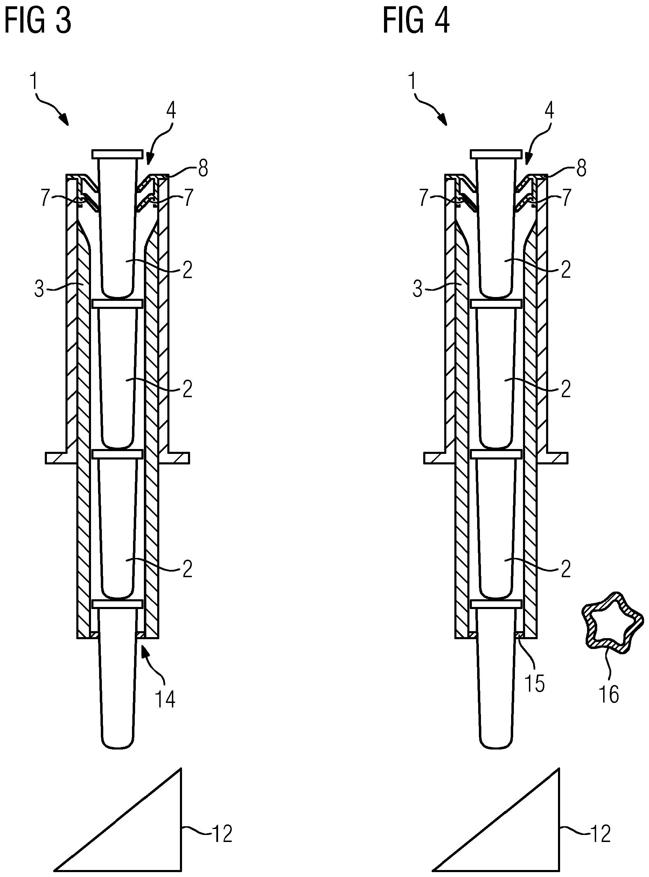

Fig. 3 zeigt eine weitere Abwandlung des in Fig. 1 dargestellten Abfallverbringungssystems (1). Anstelle des zweiten Lamellenkranzes (8') ist eine elastische Tülle (14) vorgesehen, die die zweite Öffnung (5) verschließt. Die elastische Tülle (14) kann dabei in Richtung des Abfallschachts unterschiedlich lang ausgeführt sein. Z.B. kann es sich wie dargestellt um einen kurzen Ring handeln. Alternativ kann die Ausgestaltung ähnlich des in Fig. 2 dargestellten Netzschlauchs (13) sein und z.B. die Länge einer Küvette (2) betragen. Im Übrigen sind die Abfallverbringungssysteme (1) nach Fig. 1 und Fig. 3 gleichartig ausgestaltet.

Fig. 4 zeigt eine weitere Abwandlung des in Fig. 1 dargestellten Abfallverbringungssystems (1). Anstelle des zweiten Lamellenkranzes (8') ist ein Sternschlauch (15) vorgesehen, die die zweite Öffnung (5) verschließt. Der Querschnitt (16) des Sternschlauchs (15) ist fünfzählig ausgestaltet. Der Sternschlauch (15) kann dabei in Richtung des Abfallschachts unterschiedlich lang ausgeführt sein. Z.B. kann es sich wie dargestellt um einen kurzen Ring handeln. Alternativ kann die Ausgestaltung ähnlich des in Fig. 2 dargestellten Netzschlauchs (13) sein und z.B. die Länge einer Küvette (2) betragen. Im Übrigen sind die Abfallverbringungssysteme (1) nach Fig. 1 und Fig. 4 gleichartig ausgestaltet.

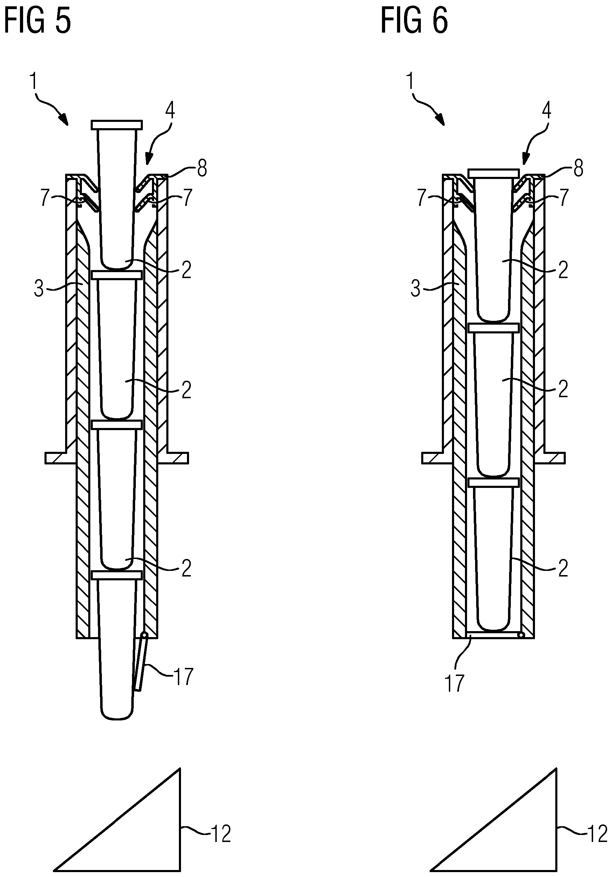

Fig. 5 und 6 zeigen eine weitere Abwandlung des in Fig. 1 dargestellten Abfallverbringungssystems (1). Anstelle des zweiten Lamellenkranzes (8') ist eine Klappe (17) vorgesehen, die die zweite Öffnung (5) verschließt. Die Klappe (17) umfasst ein Filmschanier und ist als selbstverschließende Klappe (17) ausgestaltet. In Fig. 5 ist die Klappe (17) offen, in Fig. 6 geschlossen. Die Klappe (17) erlaubt es, die Fallrichtung der Küvette (2) durch die Orientierung der Klappe (17) zu beeinflussen, da die geöffnete Klappe (17) (siehe Fig. 5) die Küvette (2) seitlich ablenkt. Im Übrigen sind die Abfallverbringungssysteme (1) nach Fig. 1 und Fig. 5 bzw. Fig. 6 gleichartig ausgestaltet.

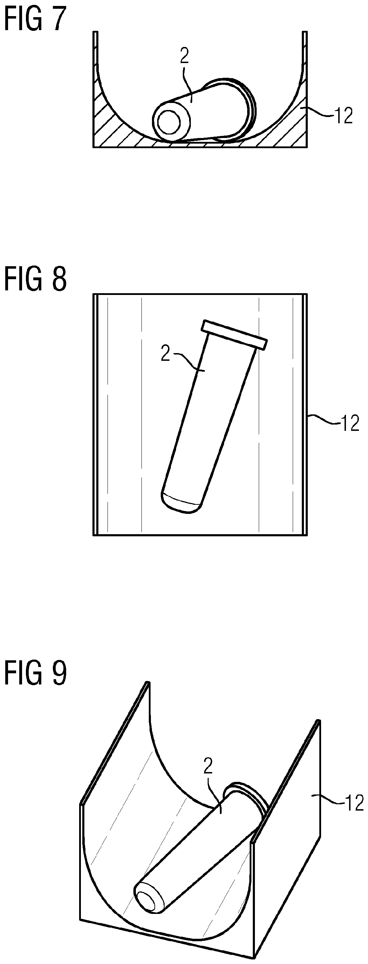

Fig. 7 bis 9 zeigen die Ausgestaltung der Rampe (12) zum Umlenken der Verbrauchsartikel in verschiedenen Ansichten, wobei Fig. 7 die Rampe (12) im Schnitt zeigt, Fig. 8 die Rampe (12) von oben, und Fig. 9 die Rampe (12) von schräg oben. Auf der Rampe (12) befindet sich eine Küvette (2).

Die Ausformung der Rampe (12) kann einen Einfluss auf das Auftreten von Spritzern haben. Ist z.B. der Querschnitt der Rampe (12) im Wesentlichen Rechteckig ausgestaltet mit abgerundeten Ecken, wobei die Gesamtinnenbreite des Rampenquerschnitts größer ist als die Länge der Küvette (2), ist ein Querstellen oder Drehen der Küvette (2) auf der Rampe (12) möglich, was zum Austreten von Flüssigkeit aus der Küvette führen kann.

Daher ist erfindungsgemäß vorliegend der Rampenquerschnitt so ausgestaltet, dass die Abrundungen in den Ecken mit einem größeren Radius ausgeführt werden und die Gesamtbreite durch schräge Seitenwände reduziert wird. So wird erreicht, dass die Küvetten (2) einerseits ausreichend Bewegungsspielraum haben, um nach dem Fallen vorhandene Bewegungsenergie durch Roll- und Taumelbewegungen zu reduzieren, jedoch andererseits der Bewegungsspielraum so weit eingeschränkt ist, dass Kipp- oder Drehbewegungen der Küvette (2), welche zu Flüssigkeitsverlust führen können, minimiert werden. Weiter werden gerade Flächen bzw. Flächen, an denen die Küvette (2) anprallen kann vermieden.

### Bezugszeichenliste

- 1: Abfallverbringungssystem
- 2: Küvette
- 3: Abfallschacht
- 4: ersten Öffnung
- 5: zweiten Öffnung
- 6: erster Abstand
- 7: Lamellen
- 8, 8`: Lamellenkranz
- 9: zweiter Abstand
- 10: erster Innendurchmesser
- 11: zweiter Innendurchmesser
- 12: Rampe
- 13: Netzschlauch
- 14: elastische Tülle
- 15: Sternschlauch
- 16: Querschnitt
- 17: Klappe

## Patentansprüche

1. Abfallverbringungssystem (1) zum Verbringen von Verbrauchsartikeln durch einen Abfallschacht (3) in einen Abfallbehälter, das Abfallverbringungssystem (1) umfassend einen Abfallschacht (3) mit einer ersten Öffnung (4) und einer zweiten Öffnung (5), wobei die erste Öffnung (4) sich außerhalb des Abfallbehälters befindet und wobei die zweite Öffnung (5) sich zum Abfallbehälter hin öffnet, wobei die erste Öffnung (4) und die zweite Öffnung (5) in einem ersten Abstand (6) zueinander angeordnet sind, wobei der Abfallschacht (3) eine Mehrzahl von selbstrückstellenden Lamellen (7) zum teilweisen oder vollständigen Verschließen der Öffnungen (4, 5) umfasst, wobei die Lamellen (7) mindestens einen ersten Lamellenkranz (8) und einen zweiten Lamellenkranz (8') bilden, wobei der erste Lamellenkranz (8) und der zweite Lamellenkran (8') in einem zweiten Abstand (9) übereinander angeordnet sind, wobei mindestens der erste Lamellenkranz (8) die erste Öffnung (4) verschließt und wobei mindestens der zweite Lamellenkranz (8`) die zweite Öffnung (5) verschließt, wobei der zweite Abstand (9) zwischen dem ersten Lamellenkranz (8) und dem zweiten Lamellenkranz (8`) mindestens drei Viertel des ersten Abstands (6) beträgt,
**dadurch gekennzeichnet, dass** der Abfallschacht (3) einen ersten Innendurchmesser (10) im Bereich der Lamellenkränze (8, 8') aufweist und wobei der Abfallschacht (3) einen zweiten Innendurchmesser (11) im Bereich zwischen dem ersten Lamellenkranz (8) und dem zweiten Lamellenkranz (8`) aufweist, wobei der zweite Innendurchmesser (11) kleiner ist als der erste Innendurchmesser (10).

2. Abfallverbringungssystem (1) nach Anspruch 1, wobei zwischen dem ersten Lamellenkranz (8) und dem zweiten Lamellenkranz (8`) keine Lamellen und/oder Lamellenkränze angeordnet sind.

3. Abfallverbringungssystem (1) nach einem der vorhergehenden Ansprüche, weiter umfassend eine Rampe (12) zum Umlenken von Verbrauchsartikeln, wobei die Rampe (12) unterhalb der zweiten Öffnung (5) angeordnet ist, so dass Verbrauchsartikel, die durch die zweite Öffnung (5) in den Abfallbehälter fallen auf die Rampe (12) fallen und von dieser umgelenkt werden.

4. Abfallverbringungssystem (1) nach Anspruch 3, wobei die Rampe (12) Seitenwände umfasst und wobei die Rampe (12) in ihrem Querschnitt (16) rechteckig mit abgerundeten Ecken und bevorzugt schrägen Seitenwänden ausgestaltet ist.

5. Abfallverbringungssystem (1) nach einem der vorhergehenden Ansprüche, wobei die Verbrauchsartikel Küvetten (2) oder Pipettenspitzen sind.

6. Abfallverbringungssystem (1) nach einem der vorhergehenden Ansprüche, wobei die Lamellen (7) aus einem elastischen Material bestehen und/oder elastisch mit dem Abfallschacht (3) verbunden sind.

7. Abfallverbringungssystem (1) nach einem der vorhergehenden Ansprüche, wobei die Lamellen (7) aus Kunststoff, Gummi und/oder Metall bestehen.

8. Abfallverbringungssystem (1) nach einem der vorhergehenden Ansprüche, wobei die Lamellen (7) mit dem Abfallschacht (3) lösbar verbunden sind.

9. Abfallverbringungssystem (1) nach einem der vorangehenden Ansprüche, wobei die Lamellen (7) einen Lamelleneinsatz bilden.

10. Abfallverbringungssystem (1) nach einem der vorhergehenden Ansprüche, wobei am Abfallschacht (3) ein Öffnungsmechanismus für einen Küvettengreifer angebracht ist, wobei bevorzugt der Öffnungsmechanismus eine Struktur umfasst, die in der Form ähnlich eines Prismas mit einem Dreieck als Grund- und Deckfläche ist.

11. Abfallverbringungssystem (1) zum Verbringen von Verbrauchsartikeln durch einen Abfallschacht (3) in einen Abfallbehälter, das Abfallverbringungssystem (1) umfassend einen Abfallschacht (3) mit einer ersten Öffnung (4) und einer zweiten Öffnung (5), wobei die erste Öffnung (4) sich außerhalb des Abfallbehälters befindet und wobei die zweite Öffnung (5) sich zum Abfallbehälter hin öffnet, wobei die erste Öffnung (4) und die zweite Öffnung (5) in einem ersten Abstand (6) zueinander angeordnet sind, wobei der Abfallschacht (3) eine Mehrzahl von selbstrückstellenden Lamellen (7) zum teilweisen oder vollständigen Verschließen der Öffnungen (4, 5) umfasst, wobei die Lamellen (7) mindestens einen ersten Lamellenkranz (8) bilden, das Abfallverbringungssystem (1) weiter umfassend eine selbstverschließende Klappe (17), wobei die Klappe bevorzugt ein Filmscharnier umfasst, wobei der erste Lamellenkranz (8) und die Klappe (17) in einem zweiten Abstand (9) übereinander angeordnet sind, wobei mindestens der erste Lamellenkranz (8) die erste Öffnung (4) verschließt und wobei die Klappe (17) am Abfallschacht (3) im Bereich der zweiten Öffnung (5) angebracht ist und die zweite Öffnung (5) verschließt, wobei der zweite Abstand (9) zwischen dem ersten Lamellenkranz (8) und der Klappe (17) mindestens drei Viertel des ersten Abstands (6) beträgt, **dadurch gekennzeichnet, dass** der Abfallschacht (3) einen ersten Innendurchmesser (10) im Bereich des ersten Lamellenkranz (8) aufweist und wobei der Abfallschacht (3) einen zweiten Innendurchmesser (11) im Bereich zwischen dem ersten Lamellenkranz (8) und der Klappe (17) aufweist, wobei der zweite Innendurchmesser (11) kleiner ist als der erste Innendurchmesser (10).

12. Automatisches Analysegerät umfassend ein Abfallverbringungssystem (1) nach einem der Ansprüche 1 bis 11, wobei das automatische Analysegerät bevorzugt einen Küvettengreifer umfasst.

13. Verfahren zum Verbringen von Küvetten (2) in einen Abfallbehälter in einem automatischen Analysegerät nach Anspruch 12, wobei der Küvettengreifer die Küvette zur ersten Öffnung (4) des Abfallschachts (3) verfährt.

## Claims

1. Waste disposal system (1) for the disposal of consumables through a waste chute (3) into a waste container, the waste disposal system (1) comprising a waste chute (3) having a first opening (4) and a second opening (5), wherein the first opening (4) is situated outside the waste container and wherein the second opening (5) opens toward the waste container, wherein the first opening (4) and the second opening (5) are arranged at a first distance (6) from one another, wherein the waste chute (3) comprises a plurality of self-resetting lamellae (7) for the partial or complete closure of the openings (4, 5), wherein the lamellae (7) form at least one first lamella annulus (8) and one second lamella annulus (8`), wherein the first lamella annulus (8) and the second lamella annulus (8') are arranged at a second distance (9) above one another, wherein at least the first lamella annulus (8) closes the first opening (4) and wherein at least the second lamella annulus (8`) closes the second opening (5), wherein the second distance (9) between the first lamella annulus (8) and the second lamella annulus (8`) is at least three quarters of the first distance (6),
**characterized in that** the waste chute (3) has a first inner diameter (10) in the region of the lamella annuli (8, 8') and wherein the waste chute (3) has a second inner diameter (11) in the region between the first lamella annulus (8) and the second lamella annulus (8`), wherein the second inner diameter (11) is smaller than the first inner diameter (10).

2. Waste disposal system (1) according to Claim 1, wherein no lamellae and/or lamella annuli are arranged between the first lamella annulus (8) and the second lamella annulus (8`).

3. Waste disposal system (1) according to either of the preceding claims, further comprising a ramp (12) for the diversion of consumables, wherein the ramp (12) is arranged below the second opening (5), with the result that consumables falling through the second opening (5) into the waste container fall onto the ramp (12) and are diverted thereby.

4. Waste disposal system (1) according to Claim 3, wherein the ramp (12) comprises sidewalls and wherein the ramp (12) is rectangular in its cross section (16) with rounded corners and preferably sloping sidewalls.

5. Waste disposal system (1) according to any of the preceding claims, wherein the consumables are cuvettes (2) or pipette tips.

6. Waste disposal system (1) according to any of the preceding claims, wherein the lamellae (7) consist of an elastic material and/or are connected elastically to the waste chute (3).

7. Waste disposal system (1) according to any of the preceding claims, wherein the lamellae (7) consist of plastic, rubber and/or metal.

8. Waste disposal system (1) according to any of the preceding claims, wherein the lamellae (7) are separably connected to the waste chute (3).

9. Waste disposal system (1) according to any of the preceding claims, wherein the lamellae (7) form a lamella insert.

10. Waste disposal system (1) according to any of the preceding claims, wherein an opening mechanism for a cuvette gripper is attached to the waste chute (3), wherein the opening mechanism preferably comprises a structure which is similar in shape to a prism having a triangle as base and top surface.

11. Waste disposal system (1) for the disposal of consumables through a waste chute (3) into a waste container, the waste disposal system (1) comprising a waste chute (3) having a first opening (4) and a second opening (5), wherein the first opening (4) is situated outside the waste container and wherein the second opening (5) opens toward the waste container, wherein the first opening (4) and the second opening (5) are arranged at a first distance (6) from one another, wherein the waste chute (3) comprises a plurality of self-resetting lamellae (7) for the partial or complete closure of the openings (4, 5), wherein the lamellae (7) form at least one first lamella annulus (8), the waste disposal system (1) further comprising a self-closing flap (17), wherein the flap preferably comprises a living hinge, wherein the first lamella annulus (8) and the flap (17) are arranged at a second distance (9) above one another, wherein at least the first lamella annulus (8) closes the first opening (4) and wherein the flap (17) is attached to the waste chute (3) in the region of the second opening (5) and closes the second opening (5), wherein the second distance (9) between the first lamella annulus (8) and the flap (17) is at least three quarters of the first distance (6),
**characterized in that** the waste chute (3) has a first inner diameter (10) in the region of the first lamella annulus (8) and wherein the waste chute (3) has a second inner diameter (11) in the region between the first lamella annulus (8) and the flap (17), wherein the second inner diameter (11) is smaller than the first inner diameter (10).

12. Automatic analytical instrument comprising a waste disposal system (1) according to any of Claims 1 to 11, wherein the automatic analytical instrument preferably comprises a cuvette gripper.

13. Method for disposing of cuvettes (2) into a waste container in an automatic analytical instrument according to Claim 12, wherein the cuvette gripper moves the cuvette to the first opening (4) of the waste chute (3).

## Revendications

1. Système (1) d'évacuation de déchets pour l'évacuation d'articles usagés par un puits (3) de déchets dans un récipient à déchets, le système (1) d'évacuation de déchets comprenant un puits (3) de déchets ayant une première ouverture (4) et une deuxième ouverture (5), dans lequel la première ouverture (4) se trouve à l'extérieur du récipient à déchets, et dans lequel la deuxième ouverture (5) s'ouvre en direction du récipient à déchets, dans lequel la première ouverture (4) et la deuxième ouverture (5) sont disposées à une première distance (6) l'une par rapport à l'autre, dans lequel le puits (3) de déchets comprend une pluralité de lamelles (7) revenant d'elles-mêmes à l'état initial pour la fermeture partielle ou complète des ouvertures (4, 5), dans lequel les lamelles (7) forment au moins une première couronne (8) de lamelles et une deuxième couronne (8') de lamelles, dans lequel la première couronne (8) de lamelles et la deuxième couronne (8') de lamelles sont disposées l'une au-dessus de l'autre à une deuxième distance (9), dans lequel au moins la première couronne (8) de lamelles ferme la première ouverture (4), et dans lequel au moins la deuxième couronne (8') de lamelles ferme la deuxième ouverture (5),
dans lequel la deuxième distance (9) entre la première couronne (8) de lamelles et la deuxième couronne (8') de lamelles représente au moins les trois quarts de la première distance (6),
**caractérisé en ce que**
le puits (3) de déchets a un premier diamètre (10) intérieur dans la partie des couronnes (8, 8') de lamelles, et dans lequel le puits (3) de déchets a un deuxième diamètre (11) intérieur dans la partie comprise entre la première couronne (8) de lamelles et la deuxième couronne (8') de lamelles, dans lequel le deuxième diamètre (11) intérieur est plus petit que le premier diamètre (10) intérieur.

2. Système (1) d'évacuation de déchets suivant la revendication 1, dans lequel il n'y a pas de lamelle et/ou il n'y a pas de couronne de lamelles entre la première couronne (8) de lamelles et la deuxième couronne (8') de lamelles.

3. Système (1) d'évacuation de déchets suivant l'une des revendications précédentes, comprenant en outre une rampe (12) pour la déviation d'articles usagés, dans lequel la rampe (12) est disposée en-dessous de la deuxième ouverture (5) de manière à ce que des articles usagés, qui tombent par la deuxième ouverture (5) dans le récipient à déchets, tombent sur la rampe (12) et soient déviés de celle-ci.

4. Système (1) d'évacuation de déchets suivant la revendication 3, dans lequel la rampe (12) comprend des parois latérales, et dans lequel la rampe (12) est conformée en ayant une section (16) transversale rectangulaire à sommets arrondis, et de préférence des parois latérales inclinées.

5. Système (1) d'évacuation de déchets suivant l'une des revendications précédentes, dans lequel les articles usagés sont des cuvettes (2) ou des pointes de pipettes.

6. Système (1) d'évacuation de déchets suivant l'une des revendications précédentes, dans lequel les lamelles (7) sont en un matériau élastique et/ou sont reliées élastiquement au puits (3) de déchets.

7. Système (1) d'évacuation de déchets suivant l'une des revendications précédentes, dans lequel les lamelles (7) sont en matière plastique, en caoutchouc et/ou en métal.

8. Système (1) d'évacuation de déchets suivant l'une des revendications précédentes, dans lequel les lamelles (7) sont reliées de manière détachable au puits (3) de déchets.

9. Système (1) d'évacuation de déchets suivant l'une des revendications précédentes, dans lequel les lamelles (7) forment un insert de lamelles.

10. Système (1) d'évacuation de déchets suivant l'une des revendications précédentes, dans lequel sur le puits (3) de déchets est monté un mécanisme d'ouverture d'un préhenseur de cuvette, dans lequel, de préférence le mécanisme d'ouverture comprend une structure, qui est sous une forme analogue à un prisme ayant un triangle comme surface de base et surface supérieure.

11. Système (1) d'évacuation de déchets pour l'évacuation d'articles usagés par un puits (3) de déchets dans un récipient à déchets, le système (1) d'évacuation de déchets comprenant un puits (3) de déchets ayant une première ouverture (4) et une deuxième ouverture (5), dans lequel la première ouverture (4) se trouve à l'extérieur du récipient à déchets, et dans lequel la deuxième ouverture (5) s'ouvre en direction du récipient à déchets, dans lequel la première ouverture (4) et la deuxième ouverture (5) sont disposées à une première distance (6) l'une par rapport à l'autre, dans lequel le puits (3) de déchets comprend une pluralité de lamelles (7) revenant d'elles-mêmes à l'état initial pour la fermeture partielle ou complète des ouvertures (4, 5), dans lequel les lamelles (7) forment au moins une première couronne (8) de lamelles, le système (1) d'évacuation de déchets comprenant en outre un volet (17) se fermant de soi-même, dans lequel le volet comprend de préférence une charnière souple, dans lequel la première couronne (8) de lamelles et le volet (17) sont disposés l'un au-dessus de l'autre à une deuxième distance (9), dans lequel au moins la première couronne (8) de lamelles ferme la première ouverture (4), et dans lequel le volet (17) est monté sur le puitss (3) de déchet dans la partie de la deuxième ouverture (5) et ferme la deuxième ouverture (5),
dans lequel la deuxième distance (9) entre la première couronne (8) de lamelles et le volet (17) représente au moins les trois quarts de la première distance (6), **caractérisé en ce que**
le puits (3) de déchets a un premier diamètre (10) intérieur dans la partie de la première couronne (8) de lamelles, et dans lequel le puits (3) de déchets a un deuxième diamètre (11) intérieur dans la partie comprise entre la première couronne (8) de lamelles et le volet (17), dans lequel le deuxième diamètre (11) intérieur est plus petit que le premier diamètre (10) intérieur.

12. Appareil d'analyse automatique comprenant un système (1) d'évacuation de déchets suivant l'une des revendications 1 à 11, dans lequel l'appareil d'analyse automatique comprend de préférence un préhenseur de cuvettes.

13. Procédé d'évacuation de cuvettes (2) dans un puits de déchets d'un appareil d'analyse automatique suivant la revendication 12, dans lequel le préhenseur de cuvettes transporte les cuvettes à la première ouverture (4) du puits (3) de déchets.
